# EUROPÄISCHE PATENTSCHRIFT

(11) **EP 3 557 316 B1**
(45) Veröffentlichungstag und Bekanntmachung des Hinweises auf die Patenterteilung: **21.12.2022**
(21) Anmeldenummer: 18000386.5
(22) Anmeldetag: 20.04.2018
(51) Int. Cl.: G02F 1/13357

(54) **ANZEIGEVORRICHTUNG**
DISPLAY DEVICE
DISPOSITIF D'AFFICHAGE

(43) Veröffentlichungstag der Anmeldung: 23.10.2019
(73) Patentinhaber: Diehl AKO Stiftung & Co. KG, 88239 Wangen (DE)
(72) Erfinder: Ratajska, Aleksandra, PL - 56-400 Olesnica (PL)
(74) Vertreter: Diehl Patentabteilung

(56) Entgegenhaltungen:
- EP-A1- 1 981 147
- EP-A1- 2 527 892
- WO-A1-2006/128422
- DE-A1- 10 231 255
- JP-A- H04 136 623
- US-A1- 2014 119 045

## Beschreibung

Die vorliegende Erfindung betrifft eine Anzeigevorrichtung für ein Bedienpaneel eines elektronischen Haushaltsgeräts mit einer Trägerplatte wenigstens einer auf der Trägerplatte montierten Lichtquelle und einer Anzeige in Form einer einfachen Lichtanzeige oder eines speziellen Anzeigeelements.

Je nach Anwendungsfall der Anzeigevorrichtung soll / kann die Anzeige nicht parallel zur Trägerplatte verlaufen. In diesem Fall müssen Maßnahmen getroffen werden, um das von der Lichtquelle ausgesendete Licht möglichst verlustfrei zur Anzeige zu leiten. Zu diesem Zweck ist zum Beispiel der Einsatz von Lichtleitern bekannt, mit denen das Licht je nach Ausführungsform entlang beliebiger Strecken geleitet werden kann.

In diesem Zusammenhang sind auch Flüssigkristallanzeigen bekannt, wie sie beispielhaft in EP 2 527 892 A1 und DE 102 31 255 A1 beschrieben sind. Solche Flüssigkristallanzeigen haben auf einer Trägerplatte montierte Leuchtdioden als Lichtquelle, ein Gehäuse mit einer lichtundurchlässigen Gehäusewandung und einem lichtdurchlässigen Durchgang oder einer Lichtleiterplatte darin sowie eine Austrittsöffnung, die sich nahezu vollständig über eine Seitenwand des Gehäuses erstreckt und in der die Anzeigeelemente der großflächigen Flüssigkristallanzeige angeordnet sind, wobei im Fall der EP 2 527 892 A1 der lichtdurchlässige Durchgang gegenüber der Austrittsöffnung mit einer Reflexionsschicht versehen ist, die eine Richtungsänderung aufweist, damit das Licht von der Lichtquelle besser durch das Gehäuse geleitet werden kann. Desweiteren sind aus EP1981147 A1, US2014119045 A1 und JP-H04136623 A Anzeigenvorrichtungen für ein Bedienpaneel eines Haushaltsgeräts bekannt. Die Oberbegriff von Anspruch 1 basiert auf der EP1981147 A1.

Es ist die Aufgabe der Erfindung, eine verbesserte Anzeigevorrichtung mit einem einfachen und kostengünstigen Aufbau zu schaffen, bei der die Anzeige nicht parallel zur Trägerplatte verläuft.

Diese Aufgabe wird gelöst durch eine Anzeigevorrichtung mit den Merkmalen des Anspruchs 1. Besonders vorteilhafte Ausgestaltungen und Weiterbildungen der Erfindung sind Gegenstand der abhängigen Ansprüche.

Die erfindungsgemäße Anzeigevorrichtung für ein Bedienpaneel eines elektronischen Haushaltsgeräts weist eine Trägerplatte; wenigstens eine Lichtquelle, die auf der Trägerplatte montiert ist; und ein Gehäuse mit einer lichtundurchlässigen Gehäusewandung und einem lichtdurchlässigen Durchgang, wobei sich der lichtdurchlässige Durchgang von einer der Trägerplatte und der wenigstens einen Lichtquelle zugewandten Eintrittsöffnung zu einer der Trägerplatte abgewandten Austrittsöffnung erstreckt, auf. Außerdem weist der lichtdurchlässige Durchgang wenigstens einen Abschnitt mit Richtungsänderung zwischen der Eintrittsöffnung und der Austrittsöffnung auf, sodass die Austrittsöffnung in einem von 0 Grad verschiedenen Winkel (d.h. nicht parallel) zur Trägerplatte verläuft, und hat die Gehäusewandung im Bereich dieses Abschnitts mit Richtungsänderung eine lichtreflektierende Ausgestaltung. Eine Anzeige der Anzeigevorrichtung ist ausgestaltet als eine einfache Lichtanzeige durch eine offene Austrittsöffnung oder als ein hinterleuchtetes Display durch ein in der Austrittsöffnung angeordnetes Anzeigeelement. Und gemäß der Erfindung hat die Austrittsöffnung des lichtdurchlässigen Durchgangs eine Querschnittsfläche, die größer ist als eine Querschnittsfläche eines engsten Abschnitts des lichtdurchlässigen Durchgangs, sodass der lichtdurchlässige Durchgang eine Trichterform hat, die in Richtung zur Austrittsöffnung hin weiter wird.

Die Anzeigevorrichtung der Erfindung ermöglicht eine Ausrichtung der Anzeige nicht parallel zur Trägerplatte. Hierzu benötigt die Anzeigevorrichtung der Erfindung lediglich ein Gehäuse mit einem lichtdurchlässigen Durchgang, der einen lichtreflektierend ausgestalteten Abschnitt mit Richtungsänderung aufweist, sodass auf weitere Bauteile wie beispielsweise kostenaufwändigere Lichtleiter verzichtet werden kann. Da der lichtdurchlässige Durchgang des Gehäuses eine sich zur Austrittsöffnung hin erweiternde Trichterform hat, kann eine möglichst gleichmäßige Ausleuchtung der Austrittsöffnung und damit der Anzeige erreicht werden.

Der Winkel zwischen der Austrittsöffnung des Durchgangs und damit der Anzeige kann je nach Ausgestaltung des Gehäuses beliebig größer 0 Grad gewählt werden. In bevorzugten Ausführungsformen beträgt dieser Winkel zum Beispiel etwa 45 Grad, etwa 90 Grad oder etwa 135 Grad.

Die lichtreflektierende Ausgestaltung der Gehäusewandung ist vorzugsweise durch eine Beschichtung der Gehäusewandung oder eine spezielle Oberflächenbeschaffenheit der Gehäusewandung ausgebildet. Alternativ kann in den Durchgang des Gehäuses auch ein Einsatz mit reflektierenden Eigenschaften eingesetzt werden. Die Gehäusewandung ist zumindest im Bereich des Abschnitts des Durchgangs mit Richtungsänderung lichtreflektierend ausgestaltet, kann aber wahlweise auch in den übrigen Abschnitten des Durchgangs lichtreflektierend ausgestaltet sein.

Der lichtdurchlässige Durchgang des Gehäuses weist wenigstens einen Abschnitt mit Richtungsänderung auf. Je nach Ausführungsform können ein oder mehrere Abschnitte mit Richtungsänderung vorgesehen sein. Im Fall von mehreren Abschnitten mit Richtungsänderung erzielen diese in ihrer Gesamtheit die gewünschte Winkeldifferenz zwischen der Austrittsöffnung bzw. der Anzeige zur Trägerplatte.

Das Gehäuse ist vorzugsweise ein Kunststoffgehäuse. Das Gehäuse kann vorzugsweise an der Trägerplatte montiert sein.

Bei der Trägerplatte handelt es sich vorzugsweis um eine Leiterplatte. Bei der wenigstens einen Lichtquelle handelt es sich vorzugsweise um eine Leuchtdiode.

Die Austrittsöffnung des lichtdurchlässigen Durchgangs ist entweder offen, sodass die Anzeige als einfache Lichtanzeige ausgestaltet ist, oder in der Austrittsöffnung des lichtdurchlässigen Durchgangs ist ein Anzeigeelement angeordnet, sodass die Anzeige als ein hinterleuchtetes Display ausgestaltet ist. Das Anzeigeelement kann zum Beispiel eine einfache lichtdurchlässige Abdeckung, eine einfache Abdeckung mit einem lichtdurchlässigen Muster, ein LCD-Display oder dergleichen sein.

Die lichtreflektierende Ausgestaltung der Gehäusewandung im Bereich des Abschnitts mit Richtungsänderung ist bevorzugt ausgestaltet, um eine spiegelnde oder eine diffuse Reflexion des von der wenigstens einen Lichtquelle ausgesendeten Lichts zu bewirken.

Der Abschnitt des Durchgangs mit Richtungsänderung kann vorzugsweise zumindest teilweise plan verlaufen, zumindest teilweise gekrümmt verlaufen oder teilweise plan und teilweise gekrümmt verlaufen.

Der lichtdurchlässige Durchgang kann vorzugsweise hohl sein oder mit einer lichtdurchlässigen Masse (z.B. Kunstharz) gefüllt sein.

Gegenstand der Erfindung ist auch ein Bedienpaneel für ein elektronisches Haushaltsgerät mit einer solchen Anzeigevorrichtung der Erfindung.

Die Anzeigevorrichtung der Erfindung ist in vorteilhafter Weise bei elektronischen Haushaltsgeräten wie Kochfeldern, Herden, Spülmaschinen, Wäschebehandlungsgeräten, Kühl- und/oder Gefriergeräten, Dunstabzugshauben und dergleichen einsetzbar. Obige sowie weitere Merkmale und Vorteile der Erfindung werden aus der nachfolgenden Beschreibung bevorzugter, nicht-einschränkender Ausführungsbeispiele anhand der beiliegenden Zeichnung besser verständlich. Darin zeigen, zum Teil schematisch:
- Fig. 1: eine perspektivische Teilschnittansicht einer Anzeigevorrichtung gemäß einem ersten Ausführungsbeispiel der Erfindung; und
- Fig. 2: eine perspektivische Teilschnittansicht einer Anzeigevorrichtung gemäß einem zweiten Ausführungsbeispiel der Erfindung.

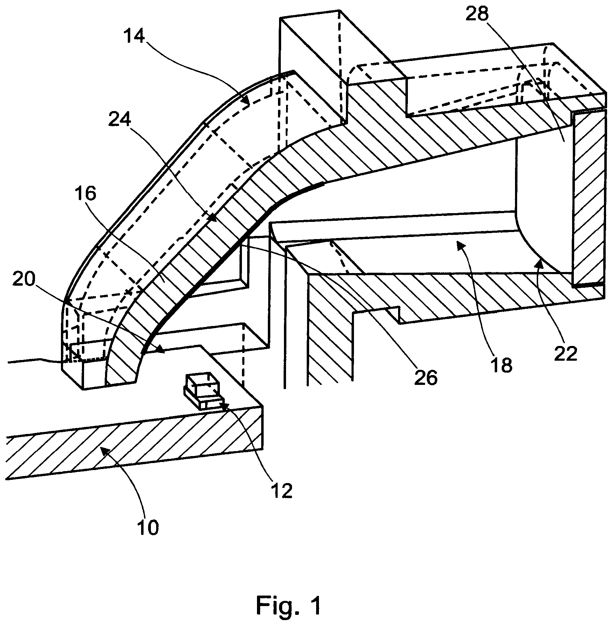

In Fig. 1 ist ein erstes Ausführungsbeispiel einer erfindungsgemäßen Anzeigevorrichtung dargestellt.

Die Anzeigevorrichtung weist eine Trägerplatte 10 in Form einer Leiterplatte auf, auf der ein oder mehrere Lichtquellen 12 montiert sind. Bei den Lichtquellen 12 handelt es sich zum Beispiel um Leuchtdioden.

Die Anzeigevorrichtung weist ferner ein Kunststoff-Gehäuse 14 auf, wobei die Gehäusewandungen 16 dieses Gehäuses 14 im Wesentlichen lichtundurchlässig sind. Das Gehäuse 14 kann zum Beispiel an der Trägerplatte 10 befestigt sein, oder umgekehrt, beispielsweise mittels Rast- oder Klemmverbindungen.

Das Gehäuse 14 weist einen hohlen Durchgang 18 auf, der sich von einer Eintrittsöffnung 20 zu einer Austrittsöffnung erstreckt. Die Eintrittsöffnung 20 des Durchgangs 18 ist der Trägerplatte 10 zugewandt und im Bereich der wenigstens einen Lichtquelle 12 positioniert. Die Austrittsöffnung 22 ist der Trägerplatte 10 abgewandt und in einem Winkel von etwa 90 Grad zur Trägerplatte 10 ausgerichtet.

Damit das Licht von der wenigstens einen Lichtquelle 12 durch den Durchgang 18 des Gehäuses 14 bis zur Austrittsöffnung 22 gelangen kann, hat der Durchgang 18 einen Abschnitt mit Richtungsänderung 24. Wie in Fig. 1 dargestellt, wird dieser Abschnitt mit Richtungsänderung 24 durch einen entsprechend gekrümmten bzw. gewinkelten Verlauf der Gehäusewandung 16 des Gehäuses 14 gebildet. Zudem ist die Gehäusewandung 16 im Bereich dieses Abschnitts mit Richtungsänderung 24 mit einer lichtreflektierend Ausgestaltung 26 versehen, wie in Fig. 1 angedeutet. Hierzu kann die Gehäusewandung 16 zum Beispiel mit einer spiegelnden oder diffus reflektierenden Beschichtung versehen sein.

In dem Ausführungsbeispiel von Fig. 1 ist ferner in der Austrittsöffnung 22 des Durchgangs 18 ein Anzeigeelement 28 angeordnet, vorzugsweise auch darin befestigt. Dieses Anzeigeelement 28 wird von dem Licht der Lichtquelle 12 hinterleuchtet. Bei dem Anzeigeelement 28 handelt es sich zum Beispiel um ein LCD-Display, eine einfache Abdeckung mit lichtdurchlässigem Muster oder eine einfache lichtdurchlässige Abdeckung.

Wie in Fig. 1 dargestellt, haben die Austrittsöffnung 22 des Durchgangs 18 und das darin angeordnete Anzeigeelement 28 eine Querschnittsfläche, die größer ist als ein Querschnitt des engsten Abschnitts des Durchgangs 18, der in diesem Ausführungsbeispiel im Bereich des Abschnitts mit Richtungsänderung 24 ist. Hierdurch hat der Durchgang eine Trichterform, die in Richtung zur Austrittsöffnung hin weiter wird, sodass eine gleichmäßigere Hinterleuchtung des Anzeigeelements 28 erzielt werden kann.

In dem Ausführungsbeispiel von Fig. 1 ist die Gehäusewandung 16 nur in dem Abschnitt mit Richtungsänderung 24 des Durchgangs lichtreflektierend ausgestaltet. In anderen Ausführungsformen der Erfindung können auch die übrigen Abschnitte des Durchgangs ganz oder teilweise lichtreflektierend ausgestaltet sein.

In dem Ausführungsbeispiel von Fig. 1 ist der Durchgang 18 durch das Gehäuse 14 hohl und damit lichtdurchlässig. Alternativ kann der Durchgang 18 auch mit einer lichtdurchlässigen Masse zum Beispiel aus Kunstharz gefüllt sein. Eine solche lichtdurchlässige Masse erhöht die Diffusionswirkung für eine gleichmäßigere Hinterleuchtung des Anzeigeelements 28 und schützt zugleich die Trägerplatte 10 und die Lichtquellen 12.

In dem Ausführungsbeispiel von Fig. 1 sind die Austrittsöffnung 22 des Durchgangs 18 und das Anzeigeelement 28 darin in einem Winkel von etwa 90 Grad zur Trägerplatte 10 ausgerichtet. In anderen Ausführungsformen der Erfindung können durch eine entsprechende Gestaltung des Gehäuses 14 auch andere Winkel größer als 0 Grad realisiert werden.

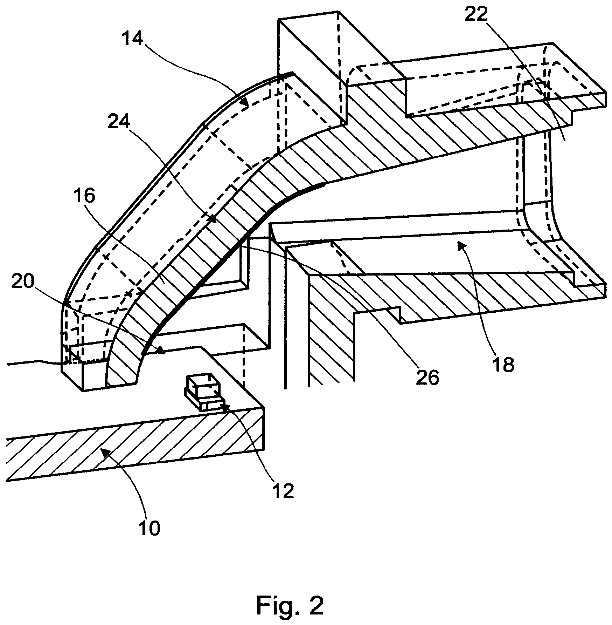

Fig. 2 zeigt ein zweites Ausführungsbeispiel einer erfindungsgemäßen Anzeigevorrichtung. Darin sind die gleichen Komponenten mit den gleichen Bezugszeichen wie im ersten Ausführungsbeispiel gekennzeichnet.

Die Anzeigevorrichtung des zweiten Ausführungsbeispiels unterscheidet sich von jener des ersten Ausführungsbeispiels dadurch, dass die Austrittsöffnung 22 des Durchgangs 18 offen ist, d.h. kein Anzeigeelement 22 in der Austrittsöffnung 22 vorgesehen ist. Die Anzeige ist damit eine einfache Lichtanzeige, durch die das von der Lichtquelle 12 ausgesendete Licht weiter aus dem Gehäuse 14 heraus emittiert wird.

Im Übrigen entsprechen Aufbau und Funktionsweise der Anzeigevorrichtung von Fig. 2 jenen von Fig. 1. Außerdem können auch die oben in Zusammenhang mit Fig. 1 erläuterten Ausführungsvarianten bei der Anzeigevorrichtung von Fig. 2 angewendet werden.

### BEZUGSZIFFERNLISTE

- 10: Trägerplatte, insbes. Leiterplatte
- 12: Lichtquelle, insbes. LED
- 14: Gehäuse
- 16: Gehäusewandung
- 18: Durchgang
- 20: Eintrittsöffnung
- 22: Austrittsöffnung
- 24: Abschnitt mit Richtungsänderung
- 26: lichtreflektierende Ausgestaltung
- 28: Anzeigeelement

## Patentansprüche

1. Anzeigevorrichtung für ein Bedienpaneel eines elektronisches Haushaltsgeräts, aufweisend:
eine Trägerplatte (10);
wenigstens eine Lichtquelle (12), die auf der Trägerplatte (10) montiert ist; und
ein Gehäuse (14) mit einer lichtundurchlässigen Gehäusewandung (16) und einem lichtdurchlässigen Durchgang (18), wobei sich der lichtdurchlässige Durchgang (18) von einer der Trägerplatte (10) und der wenigstens einen Lichtquelle (12) zugewandten Eintrittsöffnung (20) zu einer der Trägerplatte (10) abgewandten Austrittsöffnung (22) erstreckt,
wobei eine Anzeige der Anzeigevorrichtung ausgestaltet ist als eine einfache Lichtanzeige durch eine offene Austrittsöffnung (22) oder als ein hinterleuchtetes Display durch ein in der Austrittsöffnung (22) angeordnetes Anzeigeelement (28), und wobei
die Austrittsöffnung (22) des lichtdurchlässigen Durchgangs (18) eine Querschnittsfläche hat, die größer ist als eine Querschnittsfläche eines engsten Abschnitts des lichtdurchlässigen Durchgangs (18), sodass der lichtdurchlässige Durchgang (18)
eine Trichterform hat, die in Richtung zur Austrittsöffnung (22) hin weiter wird, **dadurch gekennzeichnet, dass** der lichtdurchlässige Durchgang wenigstens einen Abschnitt mit Richtungsänderung zwischen der Eintrittsöffnung und der Austrittsöffnung aufweist, so dass die Austrittsöffnung in einem von 0 Grad verschiedenen Winkel zur Trägerplatte verläuft, wobei die Gehäusewandung im Bereich des Abschnitts mit Richtungsänderung eine lichtreflektierende Ausgestaltung hat.

2. Anzeigevorrichtung nach Anspruch 1, bei welcher
die lichtreflektierende Ausgestaltung (26) der Gehäusewandung (16) im Bereich des Abschnitts mit Richtungsänderung (24) ausgestaltet ist, um eine spiegelnde oder eine diffuse Reflexion des von der wenigstens einen Lichtquelle (12) ausgesendeten Lichts zu bewirken.

3. Anzeigevorrichtung nach einem der vorhergehenden Ansprüche, bei welcher der Abschnitt mit Richtungsänderung (24) zumindest teilweise plan verläuft und/oder zumindest teilweise gekrümmt verläuft.

4. Anzeigevorrichtung nach einem der vorhergehenden Ansprüche, bei welcher der lichtdurchlässige Durchgang (18) hohl ist oder mit einer lichtdurchlässigen Masse gefüllt ist.

5. Bedienpaneel für ein elektronisches Haushaltsgerät mit einer Anzeigevorrichtung nach einem der vorhergehenden Ansprüche.

## Claims

1. Display apparatus for an operating panel of an electronic domestic appliance, having:
a carrier plate (10);
at least one light source (12) mounted on the carrier plate (10); and
a housing (14) having an opaque housing wall (16) and a light-transmissive passage (18), wherein the light-transmissive passage (18) extends from an entrance opening (20) facing the carrier plate (10) and the at least one light source (12) to an exit opening (22) facing away from the carrier plate (10),
wherein a display of the display apparatus is configured as a simple light indicator through an open exit opening (22) or as a backlit display means through a display element (28) arranged in the exit opening (22), and
wherein the exit opening (22) of the light-transmissive passage (18) has a cross-sectional area that is greater than a cross-sectional area of a narrowest section of the light-transmissive passage (18), with the result that the light-transmissive passage (18) has the shape of a funnel that increases in size in the direction of the exit opening (22),
**characterized in that** the light-transmissive passage has at least one section with a direction change between the entrance opening and the exit opening, with the result that the exit opening extends at a non-zero-degree angle to the carrier plate, wherein the housing wall has a light-reflective configuration in the region of the section with the direction change.

2. Display apparatus according to Claim 1, wherein the light-reflective configuration (26) of the housing wall (16) is configured in the region of the section with the direction change (24) in order to bring about specular or diffuse reflection of the light emitted by the at least one light source (12).

3. Display apparatus according to either of the preceding claims, wherein the section with the direction change (24) extends such that it is at least partially planar and/or extends such that it is at least partially curved.

4. Display apparatus according to any of the preceding claims, wherein the light-transmissive passage (18) is hollow or is filled with a light-transmissive compound.

5. Operating panel for an electronic domestic appliance having a display apparatus according to any of the preceding claims.

## Revendications

1. Dispositif d'affichage d'un panneau de commande d'un appareil électroménager comprenant :
une plaque de support (10) ;
au moins une source de lumière (12) qui est montée sur la plaque support (10) ; et
un boîtier (14) comprenant une paroi de boîtier opaque (16) et un passage à transmission de lumière (18), le passage à transmission de lumière (18) s'étendant d'une ouverture d'entrée (20), dirigée vers la plaque de support (10) et l'au moins une source de lumière (12), jusqu'à une ouverture de sortie (22) à l'opposé de la plaque de support (10),
un affichage du dispositif d'affichage étant conçu comme un simple affichage lumineux par une ouverture de sortie ouverte (22) ou comme un affichage rétro-éclairé à travers un élément d'affichage (28) disposé dans l'ouverture de sortie (22), et
l'ouverture de sortie (22) du passage à transmission de lumière (18) ayant une surface en coupe transversale qui est plus grande qu'une surface en coupe transversale d'une portion très étroite du passage à transmission de lumière (18) de sorte que le passage à transmission de lumière (18) ait une forme d'entonnoir qui s'élargit en direction de l'ouverture de sortie (22),
**caractérisé en ce que** le passage à transmission de lumière comporte au moins une portion à changement de direction entre l'ouverture d'entrée et l'ouverture de sortie de sorte que l'ouverture de sortie s'étende avec un angle différent de 0 degré par rapport à la plaque de support, la paroi de boîtier ayant une configuration photo-réfléchissante au niveau de la portion à changement de direction.

2. Dispositif d'affichage selon la revendication 1, dans lequel la configuration photo-réfléchissante (26) de la paroi de boîtier (16) est formée au niveau de la portion à changement de direction (24) afin de provoquer une réflexion spéculaire ou diffuse de la lumière émise par au moins une source de lumière (12).

3. Dispositif d'affichage selon l'une des revendications précédentes, dans lequel la portion à changement de direction (24) est au moins partiellement plane et/ou au moins partiellement incurvée.

4. Dispositif d'affichage selon l'une des revendications précédentes, dans lequel le passage à transmission de lumière (18) est creux ou rempli d'une matière transmettant la lumière.

5. Panneau de commande d'un appareil électroménager, comprenant un dispositif d'affichage selon l'une des revendications précédentes.
